# EUROPEAN PATENT APPLICATION

(11) **EP 3 203 757 A1**
(43) Date of publication of application: **09.08.2017**
(21) Application number: 15852178.1
(22) Date of filing: 10.06.2015
(51) Int. Cl.: H04R 1/02

(54) **HORN DUSTPROOF STRUCTURE FOR MOBILE TERMINAL AND HORN DUSTPROOF IMPLEMENTING METHOD**

(30) Priority: 23.10.2014 CN 201420616891 U
(71) Applicant: ZTE Corporation, Shenzhen, Guangdong 518057 (CN)
(72) Inventor: TANG, Feng, Shenzhen Guangdong 518057 (CN); ZHENG, Wei, Shenzhen Guangdong 518057 (CN)
(74) Representative: Savi, Massimiliano
(86) International application number: PCT/CN2015/081176
(87) International publication number: WO 2016/062098

(57) **Abstract**

A loudspeaker dustproof structure for a mobile terminal includes a loudspeaker body, a loudspeaker support, a baffle plate and a control switch. The loudspeaker body is arranged in the loudspeaker support; the loudspeaker support is provided with a sound outlet hole corresponding to the loudspeaker body; the baffle plate is connected to the loudspeaker support in a sliding mode; and the control switch is connected to the baffle plate in a fixed mode, and can drive the baffle plate to slide to open or cover the sound outlet hole in the loudspeaker support.

## Description

### Technical Field

The present invention relates to the field of loudspeaker dust prevention, and more particularly to a loudspeaker dustproof structure for a mobile terminal and a dust dustproof implementing method.

### Background

With the rapid development of a mobile terminal product technology, for a mobile terminal including terminal products such as a mobile phone, a tablet personal computer, a data card, a mobile hot spot and an interphone and the like, due to sound outlet requirements, a loudspeaker inside a product needs to keep circulating with air outside the product, and one or more layers of dustproof nets are usually attached to a sound outlet hole in a loudspeaker on a housing for a mobile terminal in the existing art. By adjusting the mesh size of the dustproof nets, dust is prevented from entering the housing on the premise of ensuring air circulation. But, the existing art has, at least, the following problems: 1. Although the meshes exist, the dustproof nets have a certain preventing action to air circulation, which will form sound impedance in a sound propagation process to influence the sound quality of the loudspeaker. 2. Due to the existence of the meshes, dust may invade into the housing sometimes, and as time flies, the dust inside the housing will be increasing, to influence the sound quality more seriously and even to block the sound.

### Summary

The present disclosure provides a loudspeaker dustproof structure for a mobile terminal and a loudspeaker dustproof implementing method, which can effectively improve the dustproof performance of a loudspeaker of a mobile terminal.

A loudspeaker dustproof structure for a mobile terminal includes a loudspeaker body, a loudspeaker support, a baffle plate and a control switch. The loudspeaker body is arranged in the loudspeaker support; the loudspeaker support is provided with a sound outlet hole corresponding to the loudspeaker body; the baffle plate is connected to the loudspeaker support in a sliding mode; the control switch is connected to the baffle plate in a fixed mode, and can drive the baffle plate to slide to open or cover the sound outlet hole in the loudspeaker support.

In an exemplary embodiment, the dustproof structure further includes a housing and a mainboard arranged inside the housing. Herein, a sound outlet hole is provided in an outer surface of the housing, and the loudspeaker support and the loudspeaker body are fixed onto the mainboard respectively.

In an exemplary embodiment, sealing foam is arranged at a joint between the loudspeaker support and the loudspeaker body, a joint between the loudspeaker support and the mainboard, and a joint between the loudspeaker support and the housing respectively.

In an exemplary embodiment, the loudspeaker support is of a three-dimensional rectangle shape, and is internally provided with a sound cavity; the loudspeaker body is arranged in the sound cavity, and the sound outlet hole is provided in an outer wall of the sound cavity.

In an exemplary embodiment, the sound outlet hole is coated with a dustproof net.

In an exemplary embodiment, the control switch includes a slide, a sliding shifting rod vertically arranged in the slide, a bottom plate laid horizontally at the bottom of the slide, a reset spring and an electromagnet. A protrusion is arranged in the middle of an upper surface of the bottom plate, and the reset spring is arranged between a lower surface of the bottom plate and the bottom of the slide. The sliding shifting rod is made from permanent magnet material; one end of the sliding shifting rod extends out of the slide and is connected to the baffle plate, and the other end of the sliding shifting rod is arranged between the protrusion of the bottom plate and a side edge of the slide; and the electromagnet is fixed onto a side edge of the slide.

In an exemplary embodiment, the baffle plate is a rectangular panel; a rod body extends from a side edge of the rectangular panel; two engaging teeth are vertically arranged at an end portion of the rod body, and the control switch is fixed between the two engaging teeth.

A loudspeaker dustproof implementing method includes the following steps.

When a mobile terminal plays a sound, a control switch drives a baffle plate to slide to open a sound outlet hole in a loudspeaker support.

When the mobile terminal does not play a sound, the control switch drives the baffle plate to slide to cover the sound outlet hole in the loudspeaker support, to shield dust.

In an exemplary embodiment, the step that a control switch drives a baffle plate to slide to open sound outlet hole in a loudspeaker support when the mobile terminal plays a sound includes the following steps.

When the mobile terminal plays a sound, the control switch is powered on, and an electromagnet of the control switch is electrified with a forward current and a polarity of the electromagnet is opposite to that of a permanent magnet of a sliding shifting rod of the control switch, such that the sliding shifting rod passes over a protrusion of a bottom plate of the control switch under an action of an attraction force, and is fixed between one side of the protrusion and a side edge of a slide of the control switch, and meanwhile the baffle plate is driven to slide to open the sound outlet hole.

In an exemplary embodiment, after the sound outlet hole is opened, the control switch is powered off, and the bottom plate of the control switch is reset under an action of a reset spring, and the sliding shifting rod is fixed onto an ON gear.

In an exemplary embodiment, the step that the control switch drives the baffle plate to slide to cover the sound outlet hole in the loudspeaker support when the mobile terminal does not play a sound includes the following steps.

When the mobile terminal does not play a sound, the control switch is powered on, and the electromagnet of the control switch is electrified with a reverse current, and the polarity of the electromagnet is the same as that of the permanent magnet of the sliding shifting rod of the control switch, such that the sliding shifting rod passes over the protrusion of the bottom plate of the control switch under an action of a push force, and is fixed between the other side of the protrusion and the side edge of the slide of the control switch, and meanwhile the baffle plate is driven to slide to cover the sound outlet hole.

In an exemplary embodiment, after the sound outlet hole is covered, the control switch is powered off, and the bottom plate of the control switch is reset under an action of the reset spring, and the sliding shifting rod is fixed onto an OFF gear.

The embodiments of the present invention have the following beneficial effects.
1. Since the non-working state time of loudspeakers is much longer than the working state time of the loudspeakers during the usage of mobile terminals of most users, baffle plates will be closed at most of time to protect products from being invaded by dust, thus greatly retarding accumulation of dust in sound outlet holes of the loudspeakers, and lengthening time of a functional fault resulting from invasion of dust into the products.
2. Since the baffle plates retard the accumulation of dust in the sound outlet holes of the loudspeakers, the structure may adopt dustproof nets having larger meshes for the mobile terminals or remove the dustproof nets, thus reducing obstruction for sound outlet and improving the sound outlet quality of the loudspeakers.
3. The baffle plates in the embodiments of the present invention are opened and closed under the control of control switches. When the users play a sound, the baffle plates will be automatically opened. When the mobile terminals are in a loudspeaker non-working state such as a standby state or the like, the baffle plates are in a close state.

### Brief Description of Drawings

FIG. 1 is an explosive view of a loudspeaker dustproof structure according to an embodiment of the present invention.
FIG. 2 is a structural diagram when a baffle plate is closed according to an embodiment of the present invention.
FIG. 3 is a structural diagram when the baffle plate is open according to an embodiment of the present invention.
FIG. 4 is a structural diagram of a control switch according to an embodiment of the present invention.
FIG. 5 is a section view of a loudspeaker dustproof structure according to an embodiment of the present invention.
FIG. 6 is a flowchart of a loudspeaker dustproof implementing method according to an embodiment of the present invention.

### Detailed Description

An implementation mode of the present invention will be illustrated in detail hereinbelow in conjunction with the accompanying drawings. It needs to be noted that embodiments in the present invention and features in the embodiments may be combined with each other if no conflicts.

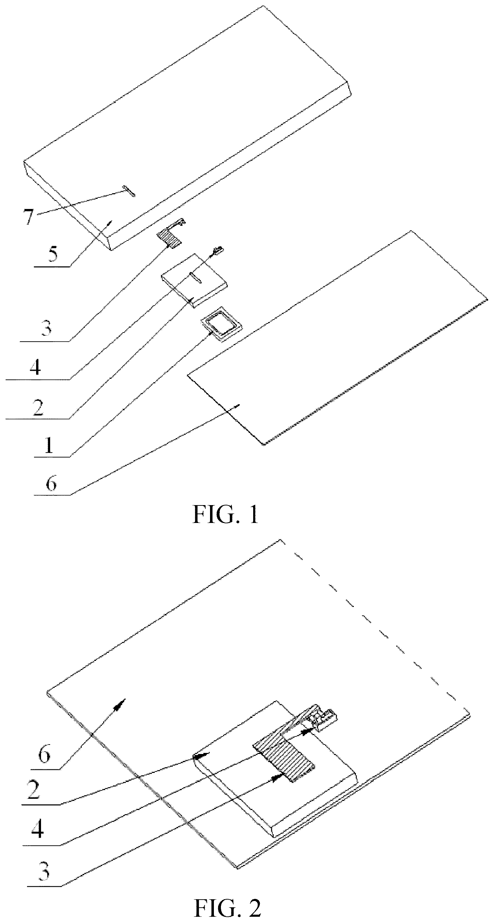

According to embodiments as shown in FIG. 1, FIG. 2 and FIG. 3, a loudspeaker dustproof structure for a mobile terminal includes a loudspeaker body 1, a loudspeaker support 2, a baffle plate 3, a control switch 4, a housing 5 and a mainboard 6. The housing 5 is a shell of the mobile terminal, and the housing 5 is provided with a sound outlet hole 7. The mainboard 6 is arranged in the housing 5, and the mainboard 6 is a circuit board inside the mobile terminal. The loudspeaker body 1 and the loudspeaker support 2 are fixed onto the mainboard 6. The loudspeaker support 2 is a shell for isolating the loudspeaker body 1 from other areas inside the mobile terminal, and the loudspeaker support 2 is of a three-dimensional rectangle shape, and is internally provided with a closed sound cavity. The loudspeaker body 1 is a loudspeaker component, and arranged in the closed sound cavity. A sound outlet hole 7 corresponding to the loudspeaker body 1 is provided in an outer wall of the sound cavity, and the sound outlet hole 7 in the outer wall of the sound cavity corresponds to the sound outlet hole 7 in the housing 5. The sound outlet hole 7 in the outer wall of the sound cavity is coated with a layer of dustproof net 8, and the dustproof net 8 is a cloth net having a small mesh structure and can stop dust larger than meshes from entering the shell. The baffle plate 3 is arranged on the sound outlet hole 7 of the loudspeaker support 2, and the baffle plate 3 is a rectangular panel, and covers or opens (i.e., expose) the sound outlet hole 7 in a sliding mode. An elongated rod body extends from a side edge of the rectangular panel, and two engaging teeth are vertically arranged at an end portion of the rod body. The control switch 4 is fixed between the two engaging teeth.

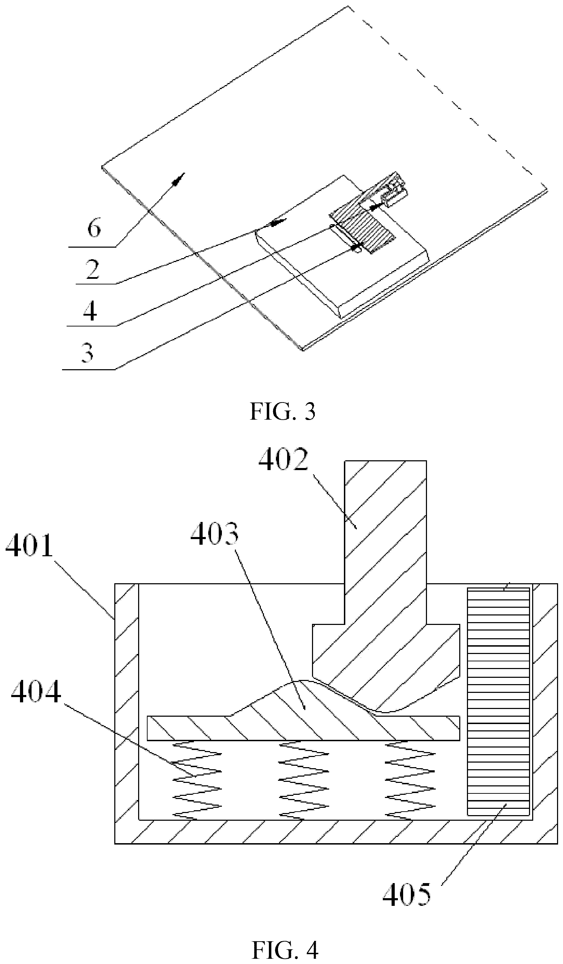

As shown in FIG. 4, the control switch 4 is a switch component, arranged on the mainboard 6 and including a slide 401, a sliding shifting rod 402 vertically arranged in the slide 401, a bottom plate 403 laid horizontally at the bottom of the slide 401, a reset spring 404 and an electromagnet 405. A protrusion is arranged in the middle of an upper surface of the bottom plate 403, and the protrusion has a circular arc-shaped side edge and divides the slide 401 into two gears, i.e., an ON gear and an OFF gear. The reset spring 404 is vertically arranged between a lower surface thereof and the bottom of the slide. The sliding shifting rod 402 is made from permanent magnet material, and one end of the sliding shifting rod extends out of the slide 401 and is fixed between the two engaging teeth in the baffle plate 3, and the other end of the sliding shifting rod stands at one side of the protrusion of the bottom plate 403 and is engaged between the protrusion of the bottom plate 403 and a side edge of the slide 401. The electromagnet 405 is fixed onto the side edge of the slide 401. When the mobile terminal plays a sound, the electromagnet 405 is powered on and is electrified with a forward current. The polarity of the electromagnet 405 is opposite to that of a permanent magnet of the sliding shifting rod 402, such that the sliding shifting rod 402 passes over the protrusion of the bottom plate 403 under the action of an attraction force, and is fixed between one side of the protrusion and the side edge of the slide 401, i.e., the ON gear. Meanwhile, the baffle plate 3 is driven to slide to open the sound outlet hole 7. Then the magnetic force disappears, and the bottom plate 403 is reset under the action of the reset spring 404, and the sliding shifting rod 402 is fixed to the ON gear. When the mobile terminal does not play a sound, the electromagnet 405 is powered on and is electrified with a reverse current. The polarity of the electromagnet 405is the same as that of the permanent magnet of the sliding shifting rod 402, such that the sliding shifting rod 402 passes over the protrusion of the bottom plate 403 under the action of a push force, and is fixed between the other side of the protrusion and the side edge of the slide 401, i.e., the OFF gear. Meanwhile, the baffle plate 3 is driven to slide to close the sound outlet hole 7. Then the magnetic force disappears, and the bottom plate 403 is reset under the action of the reset spring 404, and the sliding shifting rod 402 is fixed to the OFF gear.

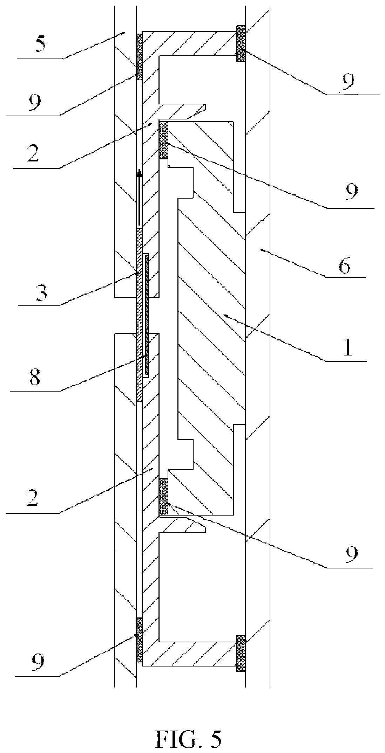

As shown in FIG. 5, sealing foam 9 is arranged at a joint between the loudspeaker support 2 and the loudspeaker body 1, a joint between the loudspeaker support 2 and the mainboard 6, and a joint between the loudspeaker support 2 and the housing 5 respectively. The sealing foam 9 is a compressible foam material, used for sealing between the loudspeaker support 2 and the loudspeaker body 1, between the loudspeaker support 2 and the mainboard 6, and between the loudspeaker support 2 and the housing 5 respectively. A front sound cavity of the loudspeaker body 1 is formed due to the sealing between loudspeaker support 2 and the loudspeaker body 1, and a rear sound cavity of the loudspeaker body 1 is formed due to the sealing between the loudspeaker support 2 and the mainboard 6.

When the mobile terminal is in a state where a sound does not need to be played such as a standby state or the like, the control switch 4 is at the OFF gear, and the baffle plate 3 covers the sound outlet hole 7, such that the loudspeaker body 1 is isolated from the outside of the mobile terminal, to prevent dust from entering into the mobile terminal. When a user executes a sound playing operation such as an operation of playing a song with a loudspeaker or making a hands-free call or the like, the control switch 4 is at the ON gear, and the baffle plate 3 slides to open the sound outlet hole 7, such that the loudspeaker body 1 is connected to the outside of the mobile terminal, to make a sound played normally. By means of the abovementioned operations, the sound outlet hole 7 is closed at most of the time, thus avoiding invasion and accumulation of dust.

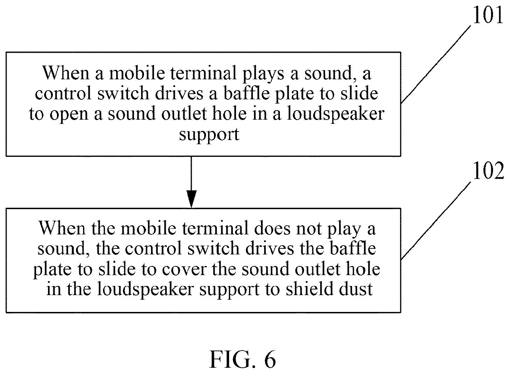

Correspondingly, as shown in FIG. 6, a loudspeaker dustproof implementing method in an embodiment of the present invention includes the following steps.

In step 101, when a mobile terminal plays a sound, a control switch drives a baffle plate to slide to open a sound outlet hole in a loudspeaker support.

Herein, opening the sound outlet hole in the loudspeaker support refers to: exposing the sound outlet hole in the loudspeaker support.

The present step may include that: when the mobile terminal plays a sound, the control switch is powered on, and an electromagnet of the control switch is electrified with a forward current, and the polarity an electromagnet is opposite to that of a permanent magnet of a sliding shifting rod of the control switch, such that the sliding shifting rod passes over a protrusion of a bottom plate of the control switch under the action of an attraction force, and is fixed between one side of the protrusion and a side edge of a slide of the control switch, and meanwhile, a baffle plate is driven to slide to open the sound outlet hole.

After the sound outlet hole is opened, the control switch may be powered off, and the bottom plate of the control switch is reset under the action of a reset spring, and the sliding shifting rod is fixed onto an ON gear.

In step 102, when the mobile terminal does not play a sound, the control switch drives the baffle plate to slide to cover the sound outlet hole in the loudspeaker support, to shield dust.

The present step may include that: when the mobile terminal does not play a sound, the control switch is powered on, and the electromagnet of the control switch is electrified with a reverse current, and the polarity an electromagnet is the same as that of the permanent magnet of the sliding shifting rod of the control switch, such that the sliding shifting rod passes over the protrusion of the bottom plate of the control switch under the action of a push force, and is fixed between the other side of the protrusion and the side edge of the slide of the control switch, and meanwhile, the baffle plate is driven to slide to cover the sound outlet hole.

After the sound outlet hole is covered, the control switch is powered off, and the bottom plate of the control switch is reset under the action of the reset spring, and the sliding shifting rod is fixed onto an OFF gear.

### Industrial Applicability

The embodiments of the present invention adopt a baffle plate to open or cover a sound outlet hole, such that dust is prevented from invading into a loudspeaker in a non-working state. Since the non-working state time of the loudspeaker is much longer than the working state time of the loudspeaker, the baffle plate will be closed at most of time, thus greatly retarding accumulation of dust in the sound outlet hole of the loudspeaker, and lengthening time of a functional fault resulting from invasion of dust into a product. In addition, embodiments of the present invention may adopt a dustproof net having larger meshes for a mobile terminal or even remove the dustproof net, thus reducing obstruction for sound outlet and improving the sound outlet quality of the loudspeaker.

## Claims

1. A loudspeaker dustproof structure for a mobile terminal, comprising a loudspeaker body, a loudspeaker support, a baffle plate and a control switch, wherein the loudspeaker body is arranged in the loudspeaker support; the loudspeaker support is provided with a sound outlet hole corresponding to the loudspeaker body; the baffle plate is connected to the loudspeaker support in a sliding mode; the control switch is connected to the baffle plate in a fixed mode, and can drive the baffle plate to slide to open or cover the sound outlet hole in the loudspeaker support.

2. The loudspeaker dustproof structure according to claim 1, further comprising a housing and a mainboard arranged inside the housing, wherein a sound outlet hole is provided in an outer surface of the housing, and the loudspeaker support and the loudspeaker body are fixed onto the mainboard respectively.

3. The loudspeaker dustproof structure according to claim 2, wherein sealing foam is arranged at a joint between the loudspeaker support and the loudspeaker body, a joint between the loudspeaker support and the mainboard, and a joint between the loudspeaker support and the housing respectively.

4. The loudspeaker dustproof structure according to any one of claims 1-3, wherein the loudspeaker support is of a three-dimensional rectangle shape, and is internally provided with a sound cavity; the loudspeaker body is arranged in the sound cavity, and the sound outlet hole is provided in an outer wall of the sound cavity.

5. The loudspeaker dustproof structure according to any one of claims 1-3, wherein the sound outlet hole is coated with a dustproof net.

6. The loudspeaker dustproof structure according to any one of claims 1-3, wherein the control switch comprises a slide, a sliding shifting rod vertically arranged in the slide, a bottom plate laid horizontally at the bottom of the slide, a reset spring and an electromagnet; a protrusion is arranged in the middle of an upper surface of the bottom plate, and the reset spring is arranged between a lower surface of the bottom plate and the bottom of the slide; the sliding shifting rod is made from permanent magnet material; one end of the sliding shifting rod extends out of the slide and is connected to the baffle plate, and the other end of the sliding shifting rod is arranged between the protrusion of the bottom plate and a side edge of the slide; and the electromagnet is fixed onto a side edge of the slide.

7. The loudspeaker dustproof structure according to any one of claims 1-3, wherein the baffle plate is a rectangular panel; a rod body extends from a side edge of the rectangular panel; two engaging teeth are vertically arranged at an end portion of the rod body, and the control switch is fixed between the two engaging teeth.

8. A loudspeaker dustproof implementing method adopting the loudspeaker dustproof structure according to any one of claims 1-7, comprising:
driving, by the control switch, the baffle plate to slide to open the sound outlet hole in the loudspeaker support when a mobile terminal plays a sound; and
driving, by the control switch, the baffle plate to slide to cover the sound outlet hole in the loudspeaker support, to shield dust when the mobile terminal does not play a sound.

9. The loudspeaker dustproof implementing method according to claim 8, wherein the step of driving, by the control switch, the baffle plate to slide to open the sound outlet hole in the loudspeaker support when a mobile terminal plays a sound comprises:
when the mobile terminal plays a sound, powering on the control switch, and electrifying the electromagnet of the control switch with a forward current, a polarity of the electromagnet being opposite to that of a permanent magnet of the sliding shifting rod of the control switch, such that the sliding shifting rod passes over the protrusion of the bottom plate of the control switch under an action of an attraction force, and is fixed between one side of the protrusion and a side edge of a slide of the control switch, and meanwhile the baffle plate is driven to slide to open the sound outlet hole.

10. The loudspeaker dustproof implementing method according to claim 9, wherein after the sound outlet hole is opened, the control switch is powered off, and the bottom plate of the control switch is reset under an action of a reset spring, and the sliding shifting rod is fixed onto an ON gear.

11. The loudspeaker dustproof implementing method according to claim 8, wherein the step of driving, by the control switch, the baffle plate to slide to cover the sound outlet hole in the loudspeaker support when the mobile terminal does not play a sound comprises:
when the mobile terminal does not play a sound, powering on the control switch, and electrifying the electromagnet of the control switch with a reverse current, the polarity of the electromagnet being the same as that of the permanent magnet of the sliding shifting rod of the control switch, such that the sliding shifting rod passes over the protrusion of the bottom plate of the control switch under an action of a push force, and is fixed between the other side of the protrusion and the side edge of the slide of the control switch, and meanwhile the baffle plate is driven to slide to cover the sound outlet hole.

12. The loudspeaker dustproof implementing method according to claim 11, wherein after the sound outlet hole is covered, the control switch is powered off, and the bottom plate of the control switch is reset under an action of the reset spring, and the sliding shifting rod is fixed onto an OFF gear.
